# EUROPEAN PATENT APPLICATION

(11) **EP 1 179 855 A1**
(43) Date of publication of application: **13.02.2002**
(21) Application number: 00202783.7
(22) Date of filing: 07.08.2000
(51) Int. Cl.: H01L 31/04, F23C 3/00, F23L 15/04

(54) **An improved thermophotovoltaic apparatus**

(71) Applicant: ABB Research Ltd., 8050 Zürich (CH)
(72) Inventor: Malfa, Enrico, 24059 Zanica (BG) (IT); Sciacca, Aldo, 20097 San Donato Milanese (MI) (IT)
(74) Representative: Giavarini, Francesco

(57) **Abstract**

A TPV apparatus for generating electric power comprising a combustion chamber to which one or more TPV conversion modules are associated.

The TPV apparatus comprises regulating means, which perform a multi-step regulation of the amount of electric power, which is generated by one or more of the TPV conversion modules.

## Description

The present invention relates to an improved thermophotovoltaic (TPV) apparatus.

More particularly, the present invention relates to an improved TPV apparatus, which is suitable for the use in systems for the generation of electric power.

It is known that systems for the distributed generation of electric power have had a large diffusion in the market, in the last years. Distributed generation (DG) systems are mainly aimed at generating electric power in the proximity of the final user, avoiding the need of an electric power distribution network.

Distributed generation of electric power is generally adopted also in combined-heat-power (CHP) systems and in combined-heat-cold-power (CHCP) systems, which refer to the simultaneous production of electric power, hot water and steam for heating or cooling purposes.

A wide range of electric power may be covered: from few hundreds watts (domestic applications) to several megawatts (huge industrial plants), depending on the customer's needs.

In the past, there have been, in the field of the distributed generation, different types of electric power generation methods, which employ generally internal combustion engines (ICE) or turbo-machines.

These traditional methods have some disadvantages, which are mainly related to the fact of using apparatuses, provided with moving parts and, therefore, subjected to wear problems, high noise levels, frequent maintenance interventions and the like.

Beside these traditional methods, some alternative methods, which imply a "static" generation of electric power, have been developed. Among these, the methods, which use a solar photovoltaic (PV) conversion for generating electric power, have to be mentioned. Solar photovoltaic converters are extensively used in low-medium scale electric power distributed generation systems. Thanks to absence of moving parts, they allow overcoming most of the disadvantages that are proper of the methods employing ICE or turbo-machines.

Similarly to the PV conversion, also to the TPV electric power conversion avoids the use of moving parts within an electric power generator. In fact, TPV electric power generation is based upon the positioning semiconductor TPV cells, which are structured similarly to the well known solar cells, in the photon flux field of a high temperature photon emitter. In practice, TPV electric power generation is based on the conversion of infrared (IR) radiation, which is emitted by a heat source. The development of emitters, able to emit a narrow-band IR radiation, and the adoption of TPV cells made of selected semiconductor compounds, such as those of the III-V families (Ge, GaAs, GaSb, InGaSb, InGaAsSb and the like), have allowed reaching high power density levels (higher than 1W/cm²). Therefore, TPV electric power generation has shown to be attractive for the relatively reduced size, installation and maintenance costs of the TPV generation apparatuses, keeping unchanged, at the same time, the advantages that are proper of the PV technology.

Several TPV apparatuses have therefore been developed in the state of the art.

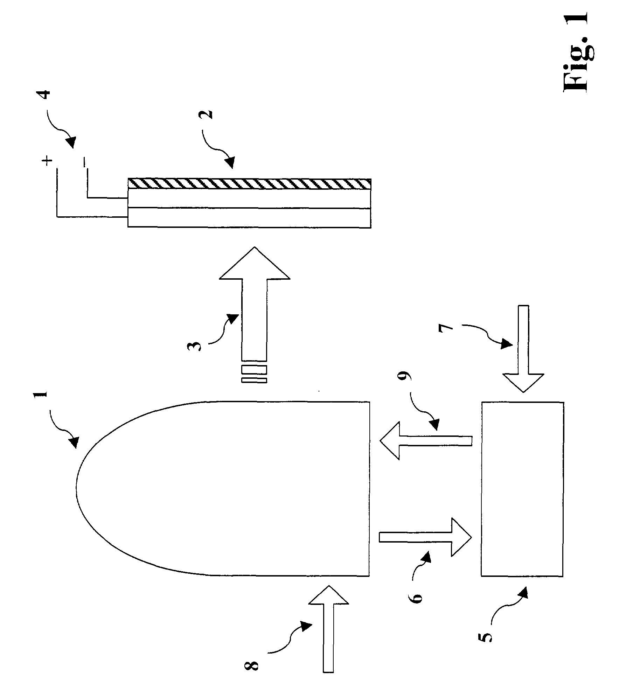

Traditionally, TPV apparatuses adopt a configuration, which is similar to that one illustrated in figure 1. In fact, because the emission spectrum of a free flame does not match with the receiving band of the conversion semiconductor cells, an emitter body 1 generally constitutes the heat source. The emitter 1 has generally a cylindrical structure, similar to the radiant tubes that are traditionally used in industrial kiln-drying systems. The emitter 1 is associated to a burner (not illustrated), which is supplied with fuel 8 and combustion air 7. The combustion process obviously provokes the emission of heat from the burner. The generated heat increases the temperature of the emitter 1, which emits externally IR photons 3. The IR radiation 3 is converted by the semiconductor cell arrays 2 into electric power 4. A recuperator 5 is generally associated to the burner. The recuperator 5 recovers the residual heat of the flue gases 6 in order to increase the whole efficiency of the conversion system. In fact, by means of heat exchangers, it is possible to pre-heat the air, which is used for the combustion (the pre-heated air flux is represented by arrow 9).

Unfortunately, the TPV apparatuses of the state of the art are affected by some drawbacks.

Most of the traditional TPV apparatuses adopt an ON-OFF regulation of the generated electric power. This means that a traditional TPV apparatus generally trends to operate in a full-load situation. When this is not possible, for example because an emergency situation, a traditional TPV apparatus has generally to be stopped. In practice, in the known apparatuses of the state of the art, it is quite difficult to modify the ratio between the thermal energy, which is generated by the emitter body and the generated electric power. This fact can represent an important drawback during the management of transient operating phases. In fact, in case of anomalous situation, it is necessary to provide with operation interruptions. This brings obviously to relatively high operation costs.

Furthermore, the practice has shown that the mentioned drawbacks often constitute a limitation of the maximum power that can be generated by a known TPV apparatus. Therefore, most of the TPV apparatuses of state of the art are generally aimed at generating electric power amounts that are lower than 1 KWe. This fact means that they can be used only for domestic or low power distributed generation systems. The use in more powerful distributed generation systems, implies to adopt a plurality of TPV apparatuses, each adopting a configuration similar to that one illustrated in figure 1. Obviously this fact means a remarkable increase of the installation and of operation costs, which make the TPV technology no more competitive for distributed generation systems for electric power values higher than 1 KWe.

In order to solve this problem, some known TPV apparatuses have adopted an approach, which consists in sensing the temperature of the hot gases generated by the burner and, consequently, regulating the inlet of fuel and/or air. This would allow keeping controlled the temperature of the emitter body and, consequently, the amount of electric power, which is generated.

The practice has shown that also this approach is not very effective.

Due to the fact that the TPV cells can operate only in relatively restricted ranges of temperature, as soon as the temperature falls below this range, the efficiency of the conversion process falls dramatically. Therefore, the amount of generated electric power drops remarkably.

This means that the TPV apparatus can operate between operating states that are very close to the ON-OFF operating states. Moreover, even keeping the TPV cells in the correct range of temperatures, the regulation of the generated electric power appears to be difficult, due to the considerable thermal inertia of the emitter bodies. This fact means that the regulation of the generated electric power is necessarily very slow.

In practice, one can say that the regulation of the generated electric power in the known TPV apparatuses of the state of the art is actually difficult, also taking into consideration this kind of approach.

Therefore, the main aim of the present invention is to provide a TPV apparatus, which allows overcoming the mentioned drawbacks.

Within this aim, another object of the present invention is to provide a TPV apparatus, which allows an easy regulation of the generated electric power.

Another object of the present invention is to provide a TPV apparatus, which allows managing effectively transient situations of the operating life of the TPV apparatus.

Another object of the present invention is to provide a TPV apparatus, which allows managing effectively emergency situations of the operating life of the TPV apparatus. Another object of the present invention is to provide a TPV apparatus, which can generate a relatively high amount of electric power, at competitive costs and with high levels of efficiency.

Another object of the present invention is to provide a TPV apparatus, which is suitable for the use in DG, CHP and CHCP systems characterised by electric power levels higher than 1 KWe.

Another object of the present invention is to provide a TPV apparatus, which is characterised by relatively low installation and operation costs.

Not the least object of the present invention is to provide a TPV apparatus, the fabrication of which is relatively easy and at low costs.

Thus, the present invention provides a TPV apparatus for generating electric power comprising:
i) a combustion chamber comprising a burner device, said burner device generating, by means of the combustion of fuel and combustion air, hot gases providing an amount of thermal power;
ii) one or more TPV conversion modules for converting into electric power at least a portion of said amount of thermal power, said one or more TPV conversion modules comprising:
   - an emitter body, said emitter body emitting IR radiation, when heated by said hot gases; and
   - a receiver body, said receiver body comprising a plurality of TPV cells for converting into electric power at least a portion the IR radiation, which is provided by said emitter body.

The TPV apparatus, according to the present invention is characterized in that it comprises:
iii) regulating means, said regulating means being associated to said one or more TPV conversion modules and performing a multi-step regulation of the amount of electric power, which is generated by one or more of said TPV conversion modules.

For a better understanding of the present invention, reference may be made to the detailed description reported hereinafter, taken in conjunction with the accompanying drawings in which:
figure 1 represents schematically the configuration of a TPV apparatus of the known type;
figure 2 represents schematically a preferred embodiment of the TPV apparatus, according to the present invention;
figure 3, represents schematically two possible operating states related to the preferred embodiment of the TPV apparatus, illustrated in figure 2;
figure 4 represents schematically a detail related to the preferred embodiment of the TPV apparatus, illustrated in figure 2.

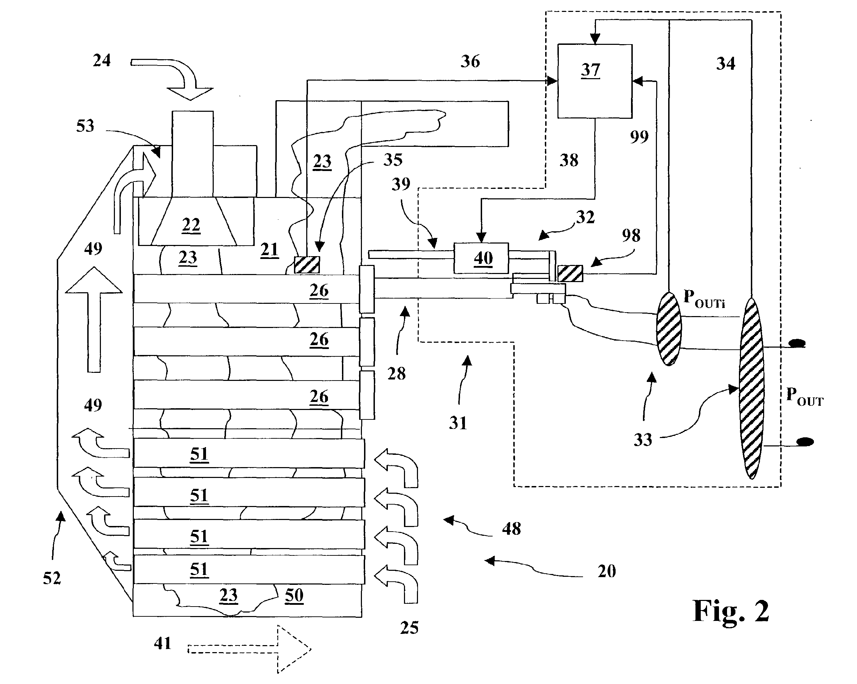

Referring to the figure 2, the TPV apparatus 20, according to the present invention, comprises a combustion chamber i) (reference 21). The combustion chamber 21 comprises a burner device 22, which generates, by means of the combustion of fuel 24 and combustion air 25, hot gases 23 that are provided with an amount of thermal power.

The TPV apparatus 20 further comprises one or more TPV conversion modules ii) (reference 26) for converting into electric power at least a portion of this amount of thermal power.

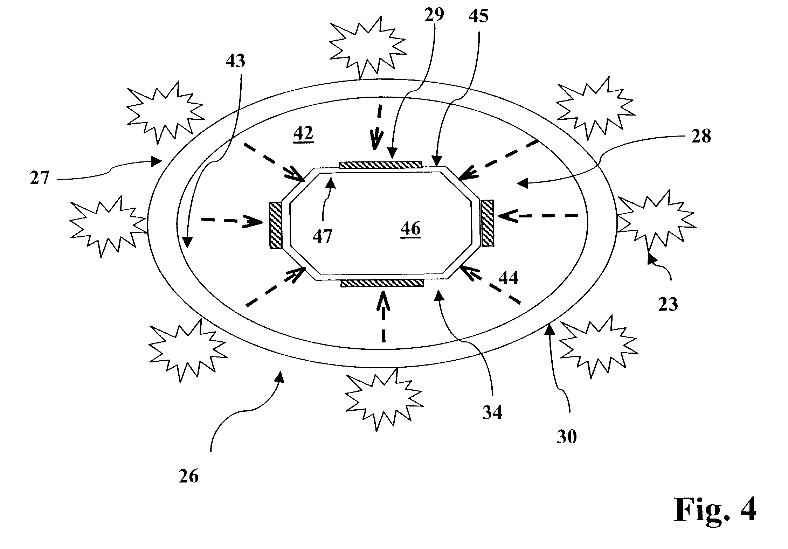

Referring also to the figure 4, the TPV modules 26 comprise also an emitter body 27, which emits an IR radiation 44, when heated by the hot gases 23 and, further, a receiver body 28. The receiver body 28 comprises a plurality of TPV cells (represented for seek of simplicity by the hatched boxes 29) for converting into electric power at least a portion the IR radiation 44.

The emitter body can advantageously comprise layers of high emissivity material such as, for example, SiC or Kanthal.

The plurality of TPV cells can be fabricated according to the techniques known in the state of the art. Preferably, the plurality of TPV cells comprises one or more low band-gap TPV cells, adopting selected semiconductor materials, such as those compounds (Ge, GaAs, GaSb, InGaSb, InGaAsSb and the like) of the III-V groups. Referring again to the figure 2, the TPV apparatus 20 comprises regulating means iii) (dotted box 31) for performing a multi-step regulation of the amount of electric power (indicated by the reference P_{OUTi}) generated by one or more of the TPV conversion modules 26. In particular, the regulating means 31 are associated to one or more of the TPV conversion modules 26. With the term "multi-step" regulation, it is meant that the regulating means 31 are able to provide with a one or more intermediate power levels of the P_{OUTi} between the ON operating state (P_{OUTi} = 100%) and the OFF operating state (P_{OUTi} = 0%) of a TPV conversion module 26. In practice, the generated power can be regulated with at least two separated steps.

Advantageously, the regulating means 31 can provide a continuos (i.e. stepless) regulation of P_{OUTi}, which allows regulating the generated electric power of one or more of the TPV conversion modules 26, according to a predefined continuos load curve.

In a preferred embodiment of the TPV apparatus 20, according to the present invention, the regulating means 31 regulate the reciprocal position of the emitter body 27 and the receiver body 28. In this manner, it is possible to regulate the amount of IR radiation, which is exchanged between the emitter body 27 and the receiver body 28.

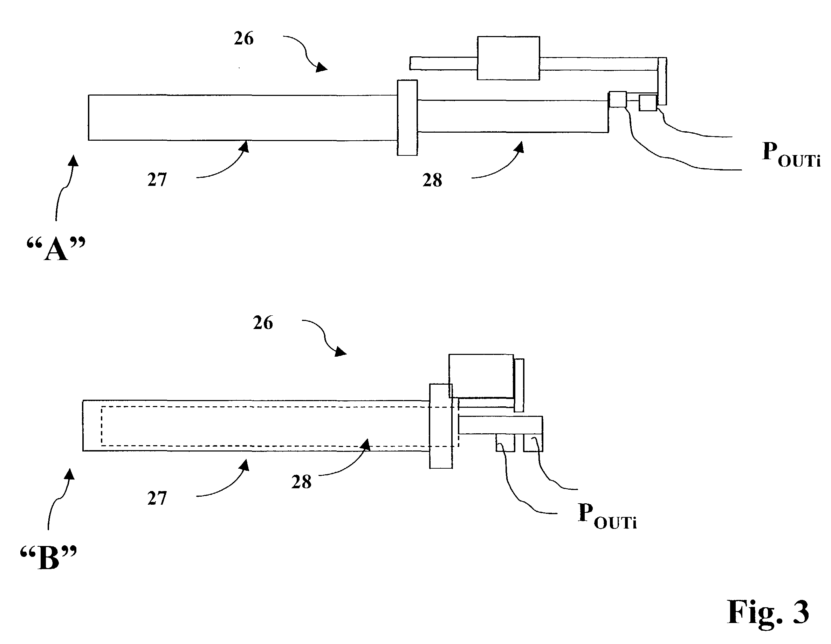

Referring to the figure 3 and specifically the case indicated by the reference "A", the emitter body 27 and the receiver body 28 are completely uncoupled. Therefore, the amount of exchanged IR radiation is, in practice, null. This fact means that the electric power P_{OUTi}, which is generated by a TPV conversion module 26 is substantially null. In practice, in the case "A" the TPV conversion module 26 is an OFF operating state. In the case indicated as "B", the emitter body 27 and the receiver body 28 are completely coupled. Therefore, the amount of exchanged IR radiation is, in practice, the maximum possible This fact means that the electric power P_{OUTi}, which is generated by a TPV conversion module 26, is at the maximum level. In practice, in the case "B" the TPV conversion module 26 is a full load operating state.

Obviously, the reciprocal position between the emitter body and the receiver body can be regulated with continuity. This fact means that the electric power P_{OUTi}, which is generated by a TPV conversion module 26, can be regulated with a large number of intermediate levels. The resolution of the regulation, which means the separation between two different power levels, can be varied, according to the needs. Also this kind of regulation can be operated for one or more TPV conversion modules 26. Thus, also the electric power P_{OUT}, which is generated by the whole TPV apparatus, can be regulate in a multi-step or, preferably, continuos manner, according to the needs.

In a preferred embodiment, the regulating means 31 are associated to the receiver body 28 of one or more of the TPV conversion modules 26, so as to regulate the position of the receiver body 28 with respect to the emitter body 27. This means that the emitter body 27 can preferably kept fixed and the receiver body 28 can vary its position with respect to the emitter body 27.

This situation is illustrated in the embodiment of the present invention represented figure 2. According this embodiment of the present invention, the regulating means 31 can comprise motion means 32, operatively connected to the receiver body 28 of one or more of the TPV conversion modules 26 and control means (not indicated in figure 2) for controlling the motion means 32.

Accordingly to an alternative embodiment of the present invention, the regulating means 31 can be associated to the emitter body 27 of one or more of the TPV conversion modules 26, so as to regulate the position of the emitter body 27 with respect of the receiver body 28.

Therefore, in this case, the receiver body 28 can preferably kept fixed and the emitter body 27 can vary its position with respect to the receiver body 28.

According this preferred embodiment of the present invention, which is not illustrated, the regulating means 31 can comprise motion means 32, mechanically connected to the emitter body 27 of one or more of the TPV conversion modules 26 and control means for controlling the motion means 32. Obviously, in a further alternative embodiment of the present invention, which is not illustrated, the regulating means 31 can be associated both to the emitter body 27 and to the receiver body 28 of one or more of the TPV conversion modules 20. In this case, the regulating means 31 can comprise motion means 32, operatively connected to both the emitter body 27 and the receiver body 28 of one or more of the TPV conversion modules 26 and control means for controlling the motion means 32.

The motion means 32 can comprise one or more electric motors 40, operatively connected, by means of motion transmission means 39, respectively to the receiver body 28 (as illustrated in figure 2) and/or to the emitter body 27 of one or more of the mentioned TPV conversion modules 26. Advantageously, the electric motors 40 can comprise one or more servomotors and/or linear motors and/or piezoelectric motors.

Alternatively, motion means 32 can comprise one or more electromechanical assemblies (not illustrated), operatively connected, by means of motion transmission means, respectively to the receiver body 28 and/or to the emitter body 27 of one or more of the mentioned TPV conversion modules 26.

Referring to the embodiment of the present invention illustrated in figure 2, the mentioned control means can comprise advantageously first sensing means 33 for generating first sensing signals 34, indicative of the amount of electric power, which is generated by one or more of said TPV converter modules. In particular, the first sensing means 33 can comprise sensors for detecting, according to the needs, the electric power P_{OUTi}, which is generated by a single TPV conversion module 26 and/or the total amount of electric power P_{OUT}, which is generated by the whole TPV apparatus 20. Also other intermediate operating situations (e.g. detecting the generated electric power of a predefined number of TPV conversion modules 26) are possible, according to the needs.

The mentioned control means can comprise also second sensing means 35 for generating second sensing signals 36, indicative of the operating temperature of one or more of the TPV conversion modules 26.

Also the use of the second sensing means 35 can be varied, according to the needs. In fact, the second sensing means 35 can comprise temperature sensors for detecting the temperature of the hot gases at the inlet or outlet of the combustion chamber 21 or for detecting directly the temperature of the emitter body of one or more TPV conversion modules 26.

The mentioned control means can comprise also third sensing means 98 for generating second sensing signals 99, indicative of the operating flow rate of the cooling fluid, which is used (as it will be described better hereinafter) in the TPV conversion modules 26. In particular, the third sensing means 99 can comprise pressure sensors that are positioned, according to a differential configuration.

Advantageously, the mentioned control means comprise also a control unit 37, which receives the first sensing signals 24 and/or the second sensing signals 36 and/or the third sensing means 99 and generates, based on these sensing signals, control signals 38 for controlling the motion means 32.

The advantages of the TPV apparatus 20, according to the present invention, are remarkable. The regulating means 31 can perform the regulation of the electric power P_{OUT} according to an elevated number of intermediate levels between the ON and OFF operating states. This fact means that the ratio between the thermal energy, which is generated by the emitter body and the generated electric power can be varied, according to the needs or a predefined load curve. Moreover, the regulating means 31 allows regulating also the so-called "turn-down ratio", which is commonly defined as the ratio between the maximum and minimum electric load, which can be supplied by the TPV apparatus.

All these facts mean that the TPV apparatus, according to the present invention, can generate very different levels electric power P_{OUT} and, therefore, it can be used for supplying very different type of loads. These facts make the TPV apparatus, according to the present invention, extremely flexible in the use.

Varying the reciprocal position of the emitter body and the receiver body, it is possible to operate also fast regulations of the electric power, which is generated by a single TPV conversion module 26 or by the whole TPV apparatus 20. By means of the control unit 37, taking into account the operating temperature of the TPV conversion modules and/or the generated electric power and/or the flow rate of the cooling fluid, different load curves can be followed, according to the needs.

Also emergency situations can be managed in an easy manner. In fact, by chance, if a TPV conversion module 26 is damaged, it is not necessary to stop the operations of the TPV apparatus 20 but one can reduce to a lower level the generated electric power. The control unit 37 can also operate as a safety device, protecting from unexpected faults the most delicate elements of the TPV apparatus 20, in particular the TPV cells.

In fact, if, by chance, for a fault of the cooling system the temperature of a TPV conversion module 26 overcomes a predefined value, the control unit 37 can send a tripping alarm signal to the motion means. In this manner, the motion means may operate a rapid de-coupling of the emitter body 27 from the receiver body 28, allowing the TPV cells not to be exposed to an excessive IR radiation.

In practice, the control unit 37 can be easily be realised, so as to be able to operate also in an "emergency mode", if necessary.

In a preferred embodiment of the present invention, one or more of TPV conversion modules 26 are advantageously positioned into the combustion chamber 21. This fact is particularly advantageous because it is possible to associate a single heat source to a plurality of TPV modules.

Therefore, the total amount of electric power, which can be provided by the whole TPV apparatus 20, can be regulated and increased, depending also on the number of TPV modules that are positioned inside the combustion chamber 21. Moreover, the use of a single combustion chamber 21 allows reducing remarkably the size of the TPV apparatus. This obviously leads to a consistent reduction of the installation and operation costs of the TPV apparatus 20. Thanks to this modular approach, the TPV apparatus can be particularly suitable for the use in DG or CHP or CHCP systems characterised by electric power levels higher than 1 KWe.

In a preferred embodiment of the present invention (see figure 2), one or more TPV conversion modules 26 are positioned along a direction (represented by the dotted arrow 41), which is substantially perpendicular to the main flow direction of the hot gases 23.

The TPV conversion modules 26 are disposed according to a staggered or inline distribution with respect of the main flow direction of the hot gases 23.

In an alternative embodiment of the present invention (not illustrated), the TPV conversion modules 26 can be positioned along a direction, which is substantially parallel to the main flow direction of the hot gases 23.

According to the embodiment of the present invention, the emitter body 27 of one or more of the TPV conversion modules 26 can be exposed, in correspondence of an external wall 30, to the flow of the hot gases 23, so as to be heated. The emitter body 27 preferably comprises a first through cavity 42. At least an internal wall 43 of the first through cavity 42 emits an IR radiation 44, when the hot gases 23 heat the emitter body 27.

One or more of the TPV conversion modules 26 can also comprise a receiver body 28, which is positioned inside the first through cavity 42, so as to be surrounded by the emitter body 27. The receiver body 28 comprises preferably an external wall 45, which supports the plurality of TPV cells 29 that are positioned, so as to receive the IR radiation 44.

Preferably, the receiver body comprises a second through cavity 46, into which a cooling fluid (not illustrated) is allowed to flow. In this manner, the internal wall 47 of the second through cavity 46 can exchange heat, so as to maintain said the operating temperature of the plurality of TPV cells 29 within a predefined range.

This embodiment of the present invention is particularly advantageous because it allows optimizing the efficiency of the operation of a TPV conversion module 26. In fact, this configuration brings intrinsically to an increase of the transmitted power density, due to the fact that the surface, which receives a certain amount of IR radiation 44, is necessarily lower than the surface, which emits the same amount of IR radiation.

Referring again to the figure 2, the TPV apparatus 20, according to the present invention can comprise advantageously a recuperator assembly 48 for pre-heating, by means of the residual heat of the hot gases 23, the combustion air 25. The recuperator assembly 48 comprises preferably at least a recuperative chamber 50, which is associated to the combustion chamber 21, so as to receive the hot gases 23 flowing through the combustion chamber 21. The recuperative chamber 50 comprises advantageously a plurality of heat exchanger tubes 51, into which the combustion air 25 is allowed to flow, so as to be pre-heated.

Preferably, the heat exchanger tubes 51 are coupled to a duct 52, which conveys the pre-heated combustion air 49 to a mixer device 53, which provides the burner device 22 with the pre-heated combustion air 49 and fuel 24 or directly to the burner device 22.

In an alternative embodiment of the TPV apparatus 20, according to the present invention, the burner device 22 can be provided with an inner heat recuperator system (not illustrated in figure 2) or, alternatively, can comprise an auto-regenerative burner. Both these embodiments of the present invention are particularly advantageous because the structure of the TPV apparatus 20, according to the present invention, can be simplified and, therefore, the overall size can be remarkably reduced. In fact, both the inner heat auto-recuperative system and the auto-regenerative burner provide a heating of the combustion air, without the need of the recuperator assembly 48 and of the duct 52.

According to the needs, the burner device 22 can comprise a burner of the flame-type or, more advantageously, of the flame-less type, so as to reduce the NOx emissions of the TPV apparatus 20.

As already mentioned above, the TPV apparatus, according to the present invention, has proven, in practice, to achieve the intended aims and objects.

In particular, the TPV apparatus, according to the present invention, has proven to be of relatively low cost installation and maintenance.

Moreover, the fabrication of the TPV apparatus, according to the present invention, has proven to be relatively easy and at low costs.

The TPV apparatus, according to the present invention, thus conceived is susceptible of numerous modifications and variations, all of which are within the scope of the inventive concept. All the details may also be replaced with other technically equivalent elements. In practice, the materials employed, so long as they are compatible with the specific use, as well as the dimensions, may be any according to the requirements and to the state of the art.

## Claims

1. A TPV apparatus for generating electric power comprising:
i) a combustion chamber comprising a burner device, said burner device generating, by means of the combustion of fuel and combustion air, hot gases providing an amount of thermal power; and
ii) one or more TPV conversion modules for converting into electric power at least a portion of said amount of thermal power, said one or more TPV conversion modules comprising:
- an emitter body, said emitter body emitting an IR radiation, when heated by said hot gases; and
- a receiver body, said receiver body comprising a plurality of TPV cells for converting into electric power at least a portion the IR radiation, which is provided by said emitter body;
**characterized in that** it comprises:
iii) regulating means, said regulating means being associated to said one or more TPV conversion modules and performing a multi-step regulation of the amount of electric power, which is generated by one or more of said TPV conversion modules.

2. A TPV apparatus, according to the claim 1, **characterized in that** said regulating means perform a continuos regulation of the generated amount of electric power.

3. A TPV apparatus, according to one or more of the previous claims, **characterized in that** said one or more TPV conversion modules are positioned into said combustion chamber.

4. A TPV apparatus, according to the claim 3, **characterized in that** said one or more TPV conversion modules are positioned along a direction, which is substantially perpendicular to the main flow direction of said hot gases.

5. A TPV apparatus, according to the claim 4, **characterised in that**, said one or more TPV conversion modules are disposed according to a staggered distribution with respect of the main flow direction of said hot gases.

6. A TPV apparatus, according to the claim 4, **characterised in that**, said one or more TPV conversion modules are disposed according to an inline distribution with respect of the main flow direction of said hot gases.

7. A TPV apparatus, according to the claim 3, **characterized in that** said one or more TPV conversion modules are positioned along a direction, which is substantially parallel to the main flow direction of said hot gases.

8. A TPV apparatus, according to one or more of the claims from 3 to 7, **characterized in that** said emitter body:
- is exposed to the flow of said hot gases, so as to be heated by said hot gases; and
- comprises a first through cavity, at least an internal wall of said first through cavity emitting an IR radiation, when said emitter body is heated by said hot gases.

9. A TPV apparatus, according to one or more of the claims from 3 to 8, **characterised in that** said receiver body:
- is positioned inside said first through cavity of said emitter body, so as to be surrounded by said emitter body; and
- comprises an external wall, which supports said plurality of TPV cells, said plurality of TPV cells being positioned, so as to receive the IR radiation emitted by the internal wall of said first through cavity of said receiver body.

10. A TPV apparatus, according to the claim 9, **characterised in that** said receiver body comprises a second through cavity, through which a cooling fluid is allowed flow, so as to maintain the operating temperature of said plurality of TPV cells within a predefined range.

11. A TPV apparatus, according to one or more of the previous claims, **characterized in that** said regulating means regulate the reciprocal position of said emitter body and said receiver body.

12. A TPV apparatus, according to the claim 11, **characterized in that** said regulating means are associated to the receiver body of one or more of said TPV conversion modules, so as to regulate the position of said receiver body with respect to said emitter body.

13. A TPV apparatus, according to the claim 12, **characterized in that** said regulating means comprise:
- motion means, said motion means being mechanically connected to the receiver body of one or more of said TPV conversion modules; and
- control means for controlling said motion means.

14. A TPV apparatus, according to the claim 11, **characterized in that** said regulating means are associated to the emitter body of one or more of said TPV conversion modules, so as to regulate the position of said emitter body with respect of said receiver body.

15. A TPV apparatus, according to the claim 14, **characterized in that** said regulating means comprise:
- motion means, said motion means being mechanically connected to the receiver body of one or more of said TPV conversion modules; and
- control means for controlling said motion means.

16. A TPV apparatus, according to the claim 11, **characterized in that** said regulating means are associated both to the emitter body and the receiver body of one or more of said TPV conversion modules, so as to regulate the position of said emitter body and of said receiver body.

17. A TPV apparatus, according to the claim 16, **characterized in that** said regulating means comprise:
- motion means, said motion means being mechanically connected to both to the emitter body and the receiver body of one or more of said TPV conversion modules; and
- control means for controlling said motion means.

18. A TPV apparatus, according to the claim 13 or to the claim 15 or to the claim 17, **characterized in that** said control means comprises:
- first sensing means for generating first sensing signals, indicative of the amount of electric power, which is generated by one or more of said TPV converter modules and/or by said TPV apparatus; and/or
- second sensing means for generating second sensing signals, indicative of the operating temperature of said one or more TPV conversion modules; and/or
- third sensing means for generating third sensing signals, indicative of the operating flow rate of the cooling fluid, which is used in said one or more TPV conversion modules;
- a control unit, said control unit receiving said first sensing signals and said second sensing signals and generating, based on said first sensing signals and/or said second sensing signals and/or third sensing signals, control signals for controlling said motion means.

19. A TPV apparatus, according to the claim 13 or to the claim 15 or to the claim 17, **characterized in that** said motion means comprise one or more electric motors and/or pneumatic motors operatively connected, by means of motion transmission means, to the emitter body and/or to the receiver body of one or more of said TPV conversion modules.

20. A TPV apparatus, according to the claim 13 or to the claim 15 or to the claim 17, **characterized in that** said motion means comprise one or more electromechanical assemblies operatively connected, by means of motion transmission means, to the emitter body and/or to the receiver body of one or more of said TPV conversion modules.

21. A TPV apparatus, according to the claim 19, **characterized in that** said electric motors comprise one or more servomotors.

22. A TPV apparatus, according to according to the claim 19, **characterized in that** said electric motors comprise one or more linear motors.

23. A TPV apparatus, according to according to the claim 19, **characterized in that** said electric motors comprise one or more piezoelectric motors.

24. A TPV apparatus, according to one or more of the previous claims, **characterised in that** it comprises a recuperator assembly for pre-heating, by means of the residual heat of said hot gases, said combustion air.

25. A TPV apparatus, according to the claim 24, **characterised in that** said recuperator assembly comprises at least a recuperative chamber, said recuperative chamber being associated to said combustion chamber, so as to receive the hot gases flowing through said combustion chamber.

26. A TPV apparatus, according to the claim 25, **characterised in that**, said recuperative chamber comprises a plurality of heat exchanger tubes into which said combustion air is allowed flow, so as to be pre-heated.

27. A TPV apparatus, according to the claim 26, **characterised in that**, said plurality of heat exchanger tubes, is coupled to a duct, which conveys the pre-heated combustion air to a mixer device, said mixer device providing said burner device with said pre-heated combustion air.

28. A TPV apparatus, according to the claim 26, **characterised in that**, said plurality of heat exchanger tubes, is coupled to a duct, which conveys the pre-heated combustion air to said burner device.

29. A TPV apparatus, according to one or more of the claims from 1 to 23, **characterised in that**, said burner device burner is provided with a heat auto-recuperative system.

30. A TPV apparatus, according to one or more of the claims from 1 to 23, **characterised in that**, said burner device comprises an auto-regenerative burner.

31. A TPV apparatus, according to one or more of the previous claims, **characterised**

32. A TPV apparatus, according to one or more of the claims from 1 to 30, **characterised in that**, said burner device burner comprises a burner of the flameless-type.

33. A TPV apparatus, according to one or more of the previous claims, **characterised in that**, said plurality of TPV cells comprises one or more low band-gap TPV cells.

34. A TPV apparatus, according to one or more of the previous claims, **characterised in that** it generates an amount of electric power, which is higher than 1 KWe.

35. A DG system, **characterised in that** it comprises at least a TPV apparatus, according to one or more of the claims from 1 to 34.

36. A CHP system, **characterised in that** it comprises at least a TPV apparatus, according to one or more of the claims from 1 to 34.

37. A CHCP system, **characterised in that** it comprises at least a TPV apparatus, according to one or more of the claims from 1 to 34.
